# EUROPÄISCHE PATENTANMELDUNG

(11) **EP 0 550 798 A1**
(43) Veröffentlichungstag der Anmeldung: **14.07.1993**
(21) Anmeldenummer: 92116997.5
(22) Anmeldetag: 05.10.1992
(51) Int. Cl.: B01D 67/00, B01D 69/08, B01D 71/68, A61M 1/18

(54) **Hohlfasermembran auf Basis von Polysulfon**

(30) Priorität: 04.10.1991 JP 284144/91
(71) Anmelder: KAWASUMI LABORATORIES, INC., Tokyo (JP); FRESENIUS-KAWASUMI CO., LTD., Shinagawa-Ku, Tokyo 140 (JP); Fresenius AG, D-61350 Bad Homburg (DE)
(72) Erfinder: Otsu, Jun, c/o Fresenius-Kawasumi Co., Ltd., Shinagawa-Ku Tokyo (JP); Maruyama, Tohru, Kawasumi Laboratories Inc., 1-26-7 Yokoyamadai Kanagawa Pref. (JP); Abe, Michio, Kawasumi Laboratories Inc., 1-26-7 Yokoyamadai Kanagawa Pref. (JP); Murakami, Masahiro, Kawasumi Laboratories Inc., 1-26-7 Yokoyamadai Kanagawa Pref. (JP); Wakamatsu, Hirofumi, Kawasumi Laboratories Inc., 1-26-7 Yokoyamadai Kanagawa Pref. (JP)
(74) Vertreter: Fuchs, Luderschmidt & Partner Patentanwälte

(57) **Zusammenfassung**

In einem Verfahren zur Herstellung einer permanent hydrophilen Hohlfasermembran auf Basis Polysulfon-Polyvinylpyrrolidon wird die nach bekannten Verfahren hergestellte Membranstruktur zur Quervernetzung des darin enthaltenen Polyvinylpyrrolidons einer Behandlung mit ionisierenden Strahlen ausgesetzt, wobei die Membranstruktur während der Bestrahlung in Kontakt mit Wasser gehalten wird. Nach der Bestrahlung verlieren solcherart behandelte Membranstrukturen auch über längere Zeiträume hinweg und nach wiederholtem Gebrauch nichts von ihren hydrophilen Eigenschaften.

## Beschreibung

Die vorliegende Erfindung befaßt sich mit einem Verfahren zur Herstellung einer hydrophilen Hohlfasermembran auf Basis von Polysulfon mit Anteilen von Polyvinylpyrrolidon, in welchem eine Lösung aus hydrophobem Polysulfon und hydrophilem Polyvinylpyrrolidon nach Extrusion aus einer Ringdüse unter Einwirkung eines Wasser enthaltenden Fällmediums nach an sich bekanntem Verfahren zu einer Membran ausgebildet wird und die fertige, Polyvinylpyrrolidon-enthaltende Membran beim praktischen Einsatz zur Reinigung von Wasser, Sterilfiltration von Wasser, insbesondere für medizinische Zwecke und zur Blutbehandlung, kein Polyvinylpyrrolidon mehr an die zu behandelnde Flüssigkeit abgibt.

Hydrophile Membranen aus Polysulfon mit Anteilen von Polyvinylpyrrolidon für insbesondere medizinischen Einsatz sind bekannt.

In der EP-A- 0 168 783 werden asymmetrische mikroporöse Hohlfasermembranen für die Blutbehandlung beschrieben, welche aus über 90 % des hydrophoben Polysulfons als Matrixpolymer und 1-10 Gew.-% Polyvinylpyrrolidon bestehen, die gut mit Wasser benetzbar sind und eine ausgezeichnete Biokompatibilität aufweisen, d.h. daß die im Blut enthaltenen Stoffe des körpereigenen Abwehrsystems nicht auf die Oberfläche der Membran ansprechen.

Das Verbleiben eines Teils des an sich hydrophilen Polyvinylpyrrolidons in der Polymermatrix des Polysulfons wird dadurch erreicht, daß die Lösung der beiden Polymeren Polysulfon und Polyvinylpyrrolidon in einem eng umrissenen Viskositätsbereich extrudiert wird, womit erreicht wird, daß die Struktur des extrudierten hohlfaserartigen Gebildes bis zur Fällung des faserbildenden Polymers aufrecht erhalten bleibt und bei der Fällung zwar der größte Teil des eingesetzten Polyvinylpyrrolidons aus der Spinnmasse herausgewaschen wird, aber dennoch ein Teil in der Membran verbleibt.

Derartig hergestellte Membranen weisen jedoch noch einige Nachteile auf. Da solche Membranen, in Filtermodulen zusammengefaßt, insbesondere in der Medizin, der pharmazeutischen oder Lebensmittel-Industrie, zumeist unter Bedingungen zum Einsatz kommen, wo sie zuvor sterilisiert sein müssen, werden diese fertiggestellten Membranen vor jedem Einsatz relativ drastischen Sterilisationsbedingungen unterworfen.

Da in der EP-A- 0 168 783 noch an sich wasserlösliches Polyvinylpyrrolidon enthalten ist, läßt es sich nicht vermeiden, daß aus diesen Membranen bei vielfacher Wiederverwendung jeweils minimale Mengen an Polyvinylpyrrolidon in das wasserhaltige, zu filtrierende Medium abgegeben werden. Zwar ist Polyvinylpyrrolidon vom medizinischen Standpunkt aus nicht toxisch - wurde ja niedermolekulares Polyvinylpyrrolidon im Zweiten Weltkrieg sogar als Plasma-Expander verwendet - doch machen sich Spuren von Polyvinylpyrrolidon im Filtrat bei anschließenden analytischen Messungen desselben oft störend bemerkbar. Darüber hinaus wird sich infolge dieser minimalen Polyvinylpyrrolidon-Freisetzung über längere Zeiträume hinweg allmählich das Retentionsverhalten solcher Membranen nach unschärferen Trenngrenzen hin verändern. Dies macht sich insbesondere bei der Hämodialyse bemerkbar, wo die Filtermodule ja das äußerst trennscharfe, typische Retentionsverhalten der Niere simulieren sollen.

Eine Möglichkeit, das in Polysulfonmembranen enthaltene Polyvinylpyrrolidon wasserunlöslich zu machen, wird in der EP 0 082 433 beschrieben. Aus der Literatur war schon bekannt, daß Polyvinylpyrrolidon durch Quervernetzung wasserunlöslich wird. Bekannte Verfahren bestanden darin, Polyvinylpyrrolidon in Luft bei 150^{o}C oder mit Ammoniumperoxodisulfat bei 90^{o}C über einen Zeitraum von 30 Minuten zu erhitzen. Weitere Möglichkeiten sind die Bestrahlung mit Licht in Gegenwart von Diazoverbindungen oder oxydativen Substanzen, wie zum Beispiel Dichromat, oder Erhitzen mit starken Basen, wie zum Beispiel Natriummetasilikat oder Trinatriumphosphat. Diese Möglichkeiten, neben der Quervernetzung mit chemischen Vernetzungsmitteln, werden auch in der EP 0 082 433 verwendet, um in Polysulfon-Membranen enthaltenes Polyvinylpyrrolidon unlöslich zu machen, wobei diese Quervernetzung vor oder nach der Fällung der Polysulfon-Matrix erfolgen kann. Ein Nachteil besteht hier jedoch darin, daß die so erhaltenen Membranen im Vergleich mit den Polyvinylpyrrolidon enthaltenden, jedoch quervernetzungsfreien Polysulfon-Membranen, herabgesetzte Trenngrenzen aufweisen. Darüber hinaus ist davon auszugehen, daß bei Membranen mit größerem Anteil an chemischen Vernetzungsmitteln die im medizinischen Einsatz erforderliche Biokompatibilität herabgesetzt wird.

Der vorliegenden Erfindung liegt daher die Aufgabe zugrunde, ein Verfahren zur Verfügung zu stellen, mit welchem auf einfache Weise der in Hohlfasermembranen aus Polysulfon enthaltene Anteil an hydrophilem Polyvinylpyrrolidon auch nach wiederholtem Gebrauch, insbesondere für medizinische Zwecke, über längere Zeiträume hinweg nicht herauslösbar in der Polysulfonmatrix fixiert werden kann, unter Aufrechterhaltung der aus der Spinnmasse, bestehend aus einer Lösung der Polymeren Polysulfon und Polyvinylpyrrolidon, nach an sich bekanntem Extrusions- und Fällverfahren jeweils eingestellten Trenn- und Porencharakteristika.

Die Lösung der Aufgabe erfolgt gemäß den kennzeichnenden Merkmalen des Anspruchs 1.

Überraschenderweise zeigte sich, daß für Membranen, in welchen das Polyvinylpyrrolidon unlöslich an die Polysulfonmatrix fixiert wird, die Gegenwart von Wasser während der Bestrahlung essentiell ist.

Es wird vermutet, daß der Sauerstoff der im Polyvinylpryrrolidon durch Bestrahlung gebildeten Carbonylradikale zusammen mit dem Wasser und dem darin gelösten Sauerstoff sich in wäßrigem Milieu eher an die Polysulfonmatrix im Sinne einer Pfropfcopolymerisation bindet und so immobilisiert und zusätzlich noch quervernetzt wird.

Bei Bestrahlung von in die Polysulfon-Matrix eingeschlossenem Polyvinylpyrrolidon in wasserfreiem Medium wurde gefunden, daß sich unter diesen Bedingungen im Polyvinylpyrrolidon eher endständige Doppelbindungen und Kettenbrüche des Polymers ereignen, so daß die Wasserlöslichkeit, und damit die Auswaschbarkeit des bestrahlten Polyvinylpyrrolidons, sogar noch zunimmt.

Bemerkenswert ist, daß das bestrahlte Polyvinylpyrrolidon in wäßrigem Medium in der Membran zwar vollständig wasserunlöslich wird und auch nicht mehr auswaschbar ist, auch nicht unter drastischen Sterilisationsbedingungen mit Wasserdampf bei erhöhter Temperatur, aber dennoch seine hygroskopischen Eigenschaften in nahezu gleichem Maße wie vor der Bestrahlung beibehält. Andererseits verleiht aber die Fähigkeit des immobilisierten Polyvinylpyrrolidons, seinerseits Wassermoleküle an sich zu binden, einer so hergestellten Membran eine ausgezeichnete Biokompatibilität, was insbesondere im Hinblick auf die Filtration von Körperflüssigkeiten, zum Beispiel bei der dialytischen Abtrennung von Endotoxinen und Pyrogenen, aber auch bei der Sterilfiltration von Wasser, zum Beispiel für analytische Zwecke, von unschätzbarem Vorteil ist.

Darüber hinaus verändern die durch die Strahlung ausgelöste Quervernetzung des Polyvinylpyrrolidons und seine Verankerung an die Polysulfon-Matrix die in der unbestrahlten Membran bereits fertig ausgebildete, sich an ausgewählten Parametern während des Extrusions- und Fällprozesses orientierende Porencharakteristik, und damit auch die Trenneigenschaften der Membran, nicht mehr.

Der Grad der Quervernetzung und der Anheftung an die Polysulfon-Matrix hängt noch von anderen Parametern als dem Gehalt von Wasser ab, wobei sich diese Parameter prinzipiell unabhängig voneinander variieren lassen und sich in ihrer Wirkung auch gegenseitig ergänzen, so daß im Hinblick auf eine optimale Auswahl zur Einstellung eines definierten Quervernetzungsgrads keine eindeutige Wertekombination für die in Frage kommenden Parameter aufgestellt werden kann.

Als Strahlungsart können prinzipiell sämtliche ionisierenden Strahlen zur Anwendung kommen, wie zum Beispiel alpha-, beta-, gamma- und Röntgen-Strahlen sowie Elektronenstrahlen, wobei gamma- und Elektronen-Strahlen bevorzugt sind. Die für die Bestrahlung in Frage kommende Energiedosis liegt im Bereich von 5 x 10³ bis 50 x 10³ Gy, in den meisten Fällen reicht schon der bevorzugte Bereich von 15 x 10³ bis 25 x 10³ Gy aus. Insgesamt steigt mit zunehmender Energiedosis auch der Quervernetzungsgrad.

Weiterhin hängt der Quervernetzungsgrad von dem jeweiligen aktuellen Sauerstoffgehalt während der Bestrahlung ab, wobei der Sauerstoff sowohl in der Atmosphäre als auch in Wasser gelöst vorliegen kann, je nach dem, ob die Membran bei der Bestrahlung über das hygroskopische Polyvinylpyrrolidon das für die Quervernetzung obligatorische Wasser aus der Luftfeuchtigkeit bezieht oder ob sie in Wasser eingetaucht bestrahlt wird. Die Bandbreite des zur Verfügung gestellten Wassers kann demgemäß von "Luftfeuchtigkeit" bis "Immersion in Wasser" reichen. Durch den aktuell bei der Bestrahlung vorliegenden Wassergehalt in Kontakt mit Polyvinylpyrrolidon kann der strahleninduzierte Vernetzungsgrad und die Anbindung an Polysulfon ebenfalls gesteuert werden. Wird die Membran durch Eintauchen in Wasser benetzt oder direkt unter Wasser bestrahlt, kann anstelle des Sauerstoffs auch Wasserstoffperoxid als Radikalquelle dem Wasser zugesetzt werden. Die Membran kann aber auch unter Vakuum bestrahlt werden, sofern während der Bestrahlung für einen genügenden Wassergehalt in der Membran gesorgt wurde, zum Beispiel durch vorheriges Tränken in Wasser und der Mangel an atmosphärischem Sauerstoff durch Erhöhung anderer Parameterwerte, wie beispielsweise der Energiedosis oder durch Zusatz von bekannten, als Radikalquellen dienenden Stoffen, wie zum Beispiel Wasserstoffperoxid, kompensiert wird.

Anhand der nachfolgenden Beispiele wird die Erfindung nun näher erläutert:

### Beispiel 1:

Reines Polysulfon (Udel P-1700 NT) und reines Polyvinylpyrrolidon (Cordon 90) wurden jeweils in Luft, im Vakuum (10⁻⁴ Torr) und eingetaucht bzw. gelöst in Wasser mit steigenden Energiedosen gamma-Strahlung, beginnend bei Raumtemperatur, bestrahlt.

Polysulfon und Polyvinylpyrrolidon wurden in Dimethylacetamid homogen vermischt und ein Teil der Lösung durch Zugabe eines Fällmediums nach bekannten Verfahren als Flachmembran koaguliert und der andere Teil der Lösung als Hohlfasermembran. Die erhaltene Flachmembran sowie die Hohlfaser wurden wie oben beschrieben mit gamma-Strahlung bestrahlt. Die Tabelle 1 zeigt zusammenfassend die Behandlung der Proben.

Die so erhaltenen Proben wurden auf strukturelle Veränderungen während der Bestrahlung untersucht. Das Polysulfon, das Polyvinylpyrrolidon und die Flachmembran wurden mittels eines IR-Spektrometers FT-1R (Shimatsu FT-1R 4000) untersucht, die Hohlfaser mittels fotoakustischer Messung (Digilab FTS-40).

Bei Polysulfon konnte mit der angegebenen Analysenmethode keinerlei Veränderung während der Bestrahlung festgestellt werden. Bei in Luft und im Vakuum bestrahltem Polyvinylpyrrolidon wurden mit steigenden Energiedosen zunehmend die Ausbildung von endständigen Doppelbindungen neben zunehmenden Kettenbrüchen beobachtet, so daß das mittlere Molekulargewicht des Polyvinylpyrrolidons drastisch gesenkt wurde. Die in Luft und Vakuum bestrahlten PVP-Proben waren in Wasser leicht löslich, während in Wasser gelöstes und dann bestrahltes PVP IR-spektroskopisch nicht untersucht werden konnte, da sich eine gelartige Substanz bildete.

An bestrahlten Flachmembran-Proben konnte mit den angegebenen Methoden keine Veränderung beobachtet werden. Bei Hohlfasermembranen ließen sich nur mit elektronenmikroskopischen Mitteln (SEM, TEM) homologe Änderungen im Hinblick auf zunehmenden Vernetzungsgrad mit steigenden Energiedosen an gamma-Strahlung beobachten.

### Beispiel 2:

Die gemäß dem in der EP-A- 0 168 783 wiedergebenen Verfahren hergestellten Hohlfasern wurden in einem Gehäuse aus Polycarbonat zu einem Modul zusammengefaßt und mit Wasser gefüllt. Das so gefüllte Modul wurde mit einer Energiedosis von 25 x 10³ Gy gamma-Strahlen bestrahlt. Danach wurde das im Modul befindliche Wasser durch bakterienfreies Wasser ersetzt und dieser Wasserersatz noch zweimal mit bakterienfreiem Wasser wiederholt. Das mit Wasser gefüllte Modul wurde sodann in einem Autoklaven bei 150^{o}C über einen Zeitraum von 30 Minuten autoklaviert. Danach wurden von der Wasserfüllung 20 ml abgetrennt, diese Probe sorgfältig eingedampft und das verwendete Gefäß eine Stunde bei 115^{o}C getrocknet. Ein Rückstand von PVP konnte quantitativ nicht ermittelt werden.

### Beispiel 3:

Ein mit Wasser gefülltes Hohlfasermodul gemäß Beispiel 2 wurde mittels Elektronenstrahlen mit einer Energiedosis von 15 x 10³ Gy bestrahlt und das Wasser, wie in Beispiel 2 beschrieben, nach dem Autoklavieren auf PVP untersucht. Auch hier konnte kein PVP-Rückstand ermittelt werden.

### Beispiel 4:

Gleiche Proben einer Hohlfaser mit 93 Gew.-% Polysulfon und 7 Gew.-% PVP (bezogen auf die Trockenmasse) wurden gemäß der in Tabelle 2 zusammengefaßten Bedingungen mit gamma-Strahlen steigender Energiedosis bestrahlt und danach getrocknet.

Jeweils 1,5 g der so behandelten Membranmasse wurden zur Prüfung auf Wasser-Auswaschbarkeit des PVP in ca. 2 cm lange Stücke zerkleinert und in 150 ml Wasser bei 115^{o}C über einen Zeitraum von 30 Minuten autoklaviert. Das Wasser wurde sodann fotometrisch nach bekannten Methoden (UV-Messung bei 220 nm sowie Jodkomplex bei 470 nm) auf den darin enthaltenen PVP-Gehalt quantitativ untersucht. Das Ergebnis der in Wasser enthaltenen Gewichtsteile an PVP ist in Tabelle 2 wiedergegeben.

Chargen von 20 ml des Wassers wurden, wie unter Beispielen 2 und 3 angegeben, auf Rückstände von PVP untersucht. Die Ergebnisse sind ebenfalls in Tabelle 2 wiedergegeben.

Aus den erhaltenen Daten läßt sich folgendes ablesen:
a) Bei Hohlfasern, die während der Bestrahlung keinen Kontakt mit Wasser hatten, wird nach der Bestrahlung um so mehr PVP ausgewaschen, je größer die Energiedosis für die bestrahlte Probe war.
b) Bei Hohlfasern, die während der Bestrahlung in Kontakt mit Wasser standen, sinkt die Auswaschbarkeit des PVP mit steigender Energiedosis für die bestrahlte Probe.

Der unter a) beschriebene Effekt läßt sich darauf zurückführen, daß das PVP in wasserfreien Membranen bei Bestrahlung eher zu Kettenbrüchen neigt als zur Quervernetzung und Anbindung an Polysulfon, welche erwünschten Effekte überwiegend bei Bestrahlung von wasserhaltigen Membranen auftreten.

**Tabelle 1**

| Bestrahlungsbedingungen | Probe | Vergleichsprobe (unbestrahlt) | Energiedosis der γ-Strahlung (10³ Gy) | | | | |
|---|---|---|---|---|---|---|---|
| | | | 5 | 10 | 20 | 40 | 80 |
| unter (atmosphärischer) Luft | PSU | + | + | + | + | + | |
| | PVP | + | + | + | + | + | |
| | Film | + | + | + | + | + | |
| | Hohlfaser | + | + | + | + | + | |
| in Vakuum (10⁻⁴ Torr) | PSU | | | + | + | + | |
| | PVP | | | + | + | + | |
| | Film | | | + | + | + | |
| | Hohlfaser | | | + | + | + | |
| in Wasser (bakterienfrei) | PSU | | | + | + | + | + |
| | PVP | | | + | + | + | + |
| | Film | | | + | + | + | + |
| | Hohlfaser | | | + | + | + | + |
| PSU: Polysulfon Film: Flachmembran PVP: Polyvinylpyrrolidon (Cordon 90) Bestrahlung bei Raumtemperatur | | | | | | | |

**Tabelle 2**

| Probe | Energiedosis der γ-Strahlung (10³ Gy) | Aussehen der Probe nach der Bestrahlung | Eluat der Hohlfasern nach Autoklavieren | |
|---|---|---|---|---|
| | | | PVP-Gehalt (ppm) | Verdampfungsrückstand (mg) in 20 ml |
| ohne Wasser | 5 | farblos transparent | 163,7 | 4,1 |
| | 15 | farblos transparent | 210,2 | 4,6 |
| | 25 | farblos transparent | 232,0 | 5,1 |
| | 50 | farblos transparent | 247,4 | 6,6 |
| gefüllt mit Wasser | 5 | farblos transparent | 8,6 | 0,0 |
| | 15 | farblos transparent | 1,5 | 0,0 |
| | 25 | farblos transparent | 0,6 | 0,0 |
| | 50 | farblos transparent | 0,1 | 0,0 |
| Wasserfüllung mit H₂O₂-Zusatz | 25 | farblos transparent | 0,4 | 0,0 |

## Patentansprüche

1. Verfahren zur Herstellung einer hydrophilen Hohlfasermembran auf Basis Polysulfon-Polyvinylpyrrolidon, in welchem eine Polysulfon und Polyvinylpyrrolidon enthaltende Lösung nach Extrusion aus einer Ringdüse unter Einwirkung eines Fällmediums nach bekannten Verfahren zu einer Hohlfasermembran ausgebildet wird, dadurch gekennzeichnet, daß die nach der Fällung gebildete Membranstruktur zur Quervernetzung des darin enthaltenen Polyvinylpyrrolidons einer Bestrahlung mit ionisierenden Strahlen, vorzugsweise mit gamma- oder Elektronen-Strahlen, unterzogen wird, wobei die Membranstruktur während der Bestrahlung in Kontakt mit Wasser gehalten wird.

2. Verfahren nach Anspruch 1, dadurch gekennzeichnet, daß mit einer Energiedosis im Bereich von 5 x 10³ bis 50 x 10³ Gy, vorzugsweise im Bereich von 1,5 x 10³ bis 2,5 x 10³ Gy, bestrahlt wird.

3. Verfahren nach den Ansprüchen 1 und 2, dadurch gekennzeichnet, daß die Membranstruktur während der Bestrahlung mit Radikalbildner, vorzugsweise Wasserstoffperoxid, enthaltendem Wasser in Kontakt gebracht wird.

4. Verfahren nach den Ansprüchen 1 und 2, dadurch gekennzeichnet, daß die mit Wasser in Kontakt gebrachte Membran unter sauerstoffhaltiger Atmosphäre bestrahlt wird.

5. Mit Wasser benetzbare Hohlfasermembran auf Basis von Polysulfon/Polyvinylpyrrolidon, hergestellt nach einem Verfahren gemäß jedem der Ansprüche 1 bis 4.
